Europäisches Patentamt

**European Patent Office** (11) Publication number: **0 025 651**

Office européen des brevets A2

(12) **EUROPEAN PATENT APPLICATION**

(21) Application number: **80302914.9**

(22) Date of filing: **22.08.80**

(51) Int. Cl.³: **G 06 F 15/353**

(30) Priority: **25.08.79 JP 108384/79**

(43) Date of publication of application: **25.03.81**
**Bulletin 81/12**

(84) Designated Contracting States: **AT BE CH DE FR GB IT LI LU NL SE**

(71) Applicant: **FUJITSU FANUC LIMITED, 5-1, Asahigaoka, 3-chome, Hino-shi, Tokyo 191 (JP)**

(72) Inventor: **Imazeki, Ryoji, 987-44, Naganuma-cho, Hachioji-shi Tokyo (JP)**
Inventor: **Yamazaki, Etuo, 566-93, Shimoongata-cho, Hachloji-shi Tokyo (JP)**
Inventor: **Sasaki, Takao, 469-4, Kobiki-cho Hachioji-shi, TOkyo Esuteito-Hacioji 2-502 (JP)**

(74) Representative: **Bedggood, Guy Stuart et al, Haseltine Lake & Co. Hazlitt House 28 Southampton Buildings Chancery Lane, London WC2A 1AT (GB)**

(54) A signal converter circuit and numerical control apparatus having such a circuit.

(57) The converter circuit has $\underline{n}$ memory elements M1 to Mn. An input signal is fed through terminal IN to the memory elements M1 to Mn. At a timing instant (e.g. t1) element M1 holds the present value (e.g. 4) of the input signal and elements M2 to Mn hold the values (e.g. 0) of the input signal at $\underline{n}$-1 preceding timing instants.

The values held in the memory elements M1 to Mn are added (in adder ADD), the result divided by $\underline{n}$ (in divider DV), and the divided result fed at an output signal value from output signal terminal OUT.

Where the input signal is a signal indicating a desired amount of movement, of a movable machine part, in numerical control apparatus, an abrupt change in the input signal is converted to a gradual change in the output signal, which facilitates smooth control of the movable machine part.

-1-

"A Signal Converter Circuit and
Numerical Control Apparatus having such
a Circuit"

The present invention relates to a signal converter circuit and numerical control apparatus having such a circuit.

In a numerical control machine for numerically controlling a machine tool, or a drawing instrument and so forth, it is customary in the art to supply a programmed command value and current position information, relating to the current position of a movable machine part, to a microprocessor or the like wherein the command value and current position information are processed to derive the amount by which the movable machine part should be moved, for controlling a servo system. In such a case, if use is made of a servo system of excellent responsivity, such as a transistor servo or the like, when the system is supplied with a signal indicating a large change in position, i.e. a large amount of movement, the movable machine part is moved in a stairstep or step-wise manner, which can cause vibrations.

In order to make such stepwise movement of a movable machine part as smooth as possible, it is desirable repeatedly to apply to the servo system signals representing respective small amounts of movement, sufficient overall to obtain a desired total amount of movement. This requires processing at short time intervals. In a microprocessor or the like, however, the time intervals between individual processings cannot greatly be reduced because of throughput factors.

According to the present invention there is provided a signal converter circuit, wherein $n$ memory elements are arranged for holding respective values of an input signal fed to the converter circuit, the respective values being the value of the input signal at a present clock timing instant and the values of the input signal at $n-1$ clock timing instants preceding the present clock timing instant, and wherein means are provided for deriving an output signal value, for an output signal fed from the converter circuit, equal to $1/n$ the sum of the values held in the memory elements.

An embodiment of the present invention can convert a rapidly changing signal to a signal which changes gently or gradually, for use in numerical control or the like.

An embodiment of the present invention can provide a signal converter circuit which, when supplied with a signal which exhibits a large change as mentioned above, converts that signal to a signal which exhibits small changes, thereby to facilitate and ensure highly accurate numerical control.

Briefly stated, a signal converter circuit embodying the present invention comprises $n$ memory elements into which input signal values are shifted and stored in accordance with clock pulse timings, an adder for adding together the contents of the $n$ memory elements, and a divider for dividing the added output from the adder by a factor of $n$.

Reference will be made, by way of example, to the accompanying drawings, in which:-

Figure 1 is a block diagram illustrating principal parts of an embodiment of the present invention;

Figure 2 is a diagram explanatory of the operation of the embodiment shown in Figure 1; and

Figure 3 is a block diagram illustrating principal parts of another embodiment of the present invention.

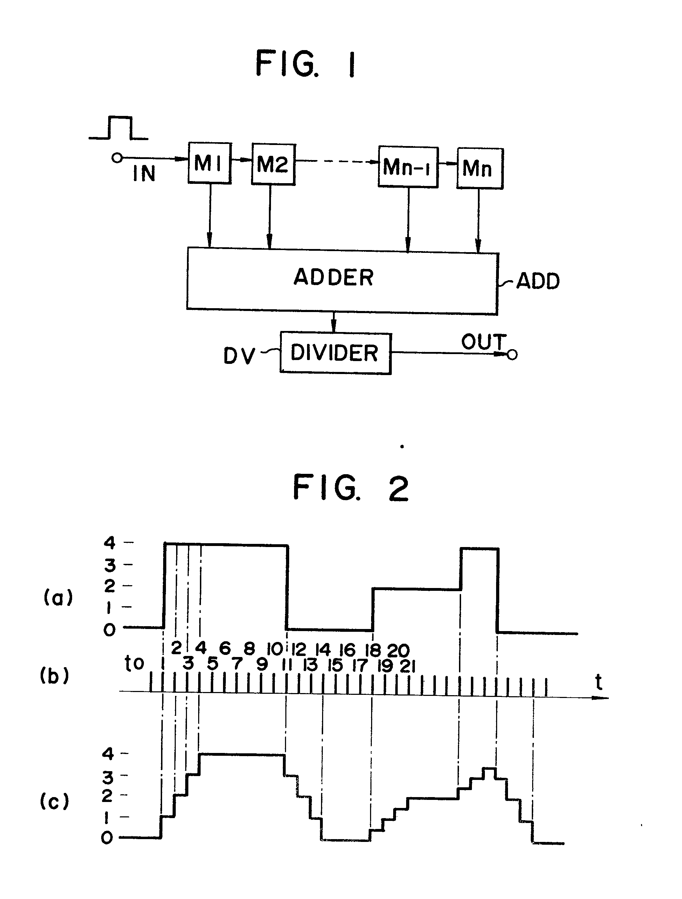

In Figure 1 there are shown in block form principal parts of an embodiment of the present invention, in which memory elements M1 to Mn are cascade-connected to make up a shift register and in which an input signal applied to an input terminal IN is shifted through the memory elements M1 to Mn one after another upon each occurrence of a clock pulse. The $n$ contents of the memory elements M1 to Mn are added together by an adder ADD, and the added output therefrom is divided by $n$ in a divider DV, to obtain 1/nth of the added output, to derive a converted signal from an output terminal OUT.

As the adder, an analogue or digital adder may be used depending on whether the input signal is analogue or digital, and the adder is arranged to add together the outputs from the $n$ memory elements M1 to Mn concurrently; to this end, various known circuit arrangements can be employed. It is also possible to adopt various known circuit arrangements for the divider DV.

For example, if $n = 4$, then the signal converter circuit comprises four memory elements M1 to M4, an adder ADD for adding together stored contents of the memory elements and a divider DV for dividing the added output to obtain 1/4 of that output. In the case where the input signal is a digital signal, the memory elements are formed of flip-flops, CCD's or the like and use is made of an arrangement which has a bit capacity equal to the number of bits in the digital signal.

Figure 2 is explanatory of the operation of the embodiment shown in Figure 1.

As shown in Figure 2(a), a signal representing an amount of movement is input in accordance with clock pulses depicted in Figure 2(b). If $n=4$, as mentioned above, at the moment t1 the value "4" of the input signal at that moment is written into the memory element M1 only, the other memory elements M2 to M4 receive "O"; consequently, the added output from the adder ADD is then "4", which is divided by 4 in the divider DV to provide an output signal value "1". At the moment t2 the stored content "4" of the memory element M1 is shifted to the memory element M2 and, at that same time, the signal value "4" of the input signal at moment t2 is written in the memory element M1 and an added output, 4+4+0+0=8, is obtained by the adder ADD and divided by the divider DV to yield an output signal value "2". In a similar manner, an output signal value "3" is obtained at a moment t3 and an output signal value "4" at a moment t4. Accordingly, an input signal which has changed from "O" to "4" at moment t1 (and holds value "4") is converted to an output signal having step value increases of "1", which is 1/4 of 4, at successive moments t1 to t4, in accordance with the timing of clock pulses.

When the input signal changes from "4" to "O" at a moment t11, the content of the memory element M1 becomes "O" while the contents of the other memory elements M2 to M4 are still "4", consequently an output signal value "3" is provided. At moments t12, t13, and t14 output signal values "2", "1" and "O" are provided respectively.

In a case in which an input signal value "2" is applied at a moment t18, there are produced at moments t18 to t21 output signal values which sequentially increase by steps of "0.5". Accordingly, the input signal shown in Figure 2(a) is converted to an output signal shown in Figure 2(c), that is, a signal having relatively small amounts of step variation; therefore, a movable machine part can be moved smoothly.

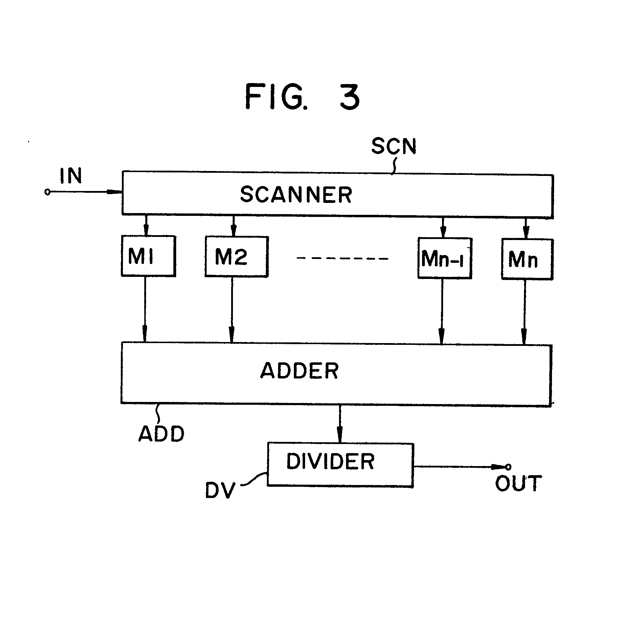

Figure 3 illustrates in block form another embodiment of the present invention, in which parts corresponding to those in Figure 1 are identified by the same reference characters. In Figure 3, reference character SCN indicates a scanner. The signal applied to the input terminal IN is delivered to the scanner SCN which scans the memory elements M1 to Mn in accordance with the timings of clock pulses and input signal values are written into the memory elements M1 to Mn one after another _via_ the scanner SCN and held until they are rewritten at a next timing. Accordingly, the output signal obtained by dividing the added output values from the adder ADD by _n_ in the divider DV is similar to the output signal obtainable in the embodiment of Figure 1.

In a case where the input signal is an analog signal, analog memory elements are used as the memory elements M1 to Mn and, in the embodiment of Figure 1, a delay circuit may also be employed. Further, when an analog signal of such a waveform as shown in Figure 2(a) is input, the resulting output signal has a waveform as shown in Figure 2(c), which varies in value by steps 1/n the size of the steps in the input signal, at successive clock pulse instants.

As described previously, even an input signal exhibiting a rapid change in value is converted into a signal exhibiting smaller value changes. If the number of memory elements M1 to Mn is increased the output signal exhibits smaller value changes for a given change in input signal value. This can ensure smooth acceleration and deceleration in a case in which the output signal is applied to a servo system to control the movable machine part, thus permitting highly accurate control. As has been described in the foregoing, in an embodiment of the present invention, an analog or digital signal, for example representing an amount of movement to be executed under numerical control, is written into memory elements M1 to Mn one after another upon the occurrence of successive clock pulses, the contents of the $n$ memory elements M1 to Mn are added together and then the added output is divided by $n$ (at each clock pulse timing) so that even if a signal representing a rapid change is input a signal can be output which represents changes $1/n$ times the original change. Since the time intervals between individual processings for numerical control are long, a signal representing an abrupt change in an amount of movement can be converted to a signal representing gentle changes for input to a servo system, enabling smooth movement of a movable machine part. The adder ADD and the divider DV can also be formed as a unitary structure. For example, in a case in which $2^n$ memory elements are provided, the divider DV may be an arrangement which shifts the contents of the memory elements by $n$ bits (equivalent to division by $2^n$), and consequently it is sufficient for the adder ADD only to add the contents of the memory elements having been shifted by $n$ bits.

Thus, in an embodiment of this invention, an input signal is written into $n$ memory elements one after another in accordance with clock pulse timings, the contents of the $n$ memory elements at each clock pulse timing are added together by an adder and the added output from the adder is divided by $n$ by a divider, thereby to convert an input signal having an abrupt change in value to a signal which gently changes in value.

CLAIMS.

1.      A signal converter circuit, wherein $n$ memory elements are arranged for holding respective values of an input signal fed to the converter circuit, the respective values being the value of the input signal at a present clock timing instant and the values of the input signal at $n-1$ clock timing instants preceding the present clock timing instant, and wherein means are provided for deriving an output signal value, for an output signal fed from the converter circuit, equal to $1/n$ the sum of the values held in the memory elements.

2.      A circuit as claimed in claim 1, wherein the means for deriving an output signal value include an adder arranged for adding together the values held in the memory elements, and a divider for dividing by $n$ the result of the addition effected by the adder.

3.      A circuit as claimed in claim 1, wherein $n=2^N$ and input signal values are digital, and wherein the means for deriving an output signal value derive that value by addition of the input signal values held in the memory elements after bit shifting by N bits, thereby effectively to divide the input signal values by $2^N$.

4.      A circuit as claimed in claim 1, 2 or 3, wherein the $n$ memory elements are cascade-connected to form a shift register, to one end of which the input signal is fed.

5.      A circuit as claimed in claim 1, 2 or 3, further comprising a scanner arranged to scan the input signal and write the respective input signal values into the memory elements.

6.      Numerical control apparatus, having a signal converter circuit as claimed in any preceding claim, arranged for receiving as the input signal for the converter circuit a signal indicating a desired amount of movement.

0025651

1/2

FIG. 1

FIG. 2

# FIG. 3

SCN

IN → SCANNER

M1    M2   ------   Mn-1    Mn

ADDER

ADD

DIVIDER → OUT

DV

0025651